# DEMANDE DE BREVET EUROPEEN

(11) **EP 1 808 725 A1**
(43) Date de publication de la demande: **18.07.2007**
(21) Numéro de dépôt: 06290077.4
(22) Date de dépôt: 12.01.2006
(51) Int. Cl.: G02C 5/22, G02C 3/00

(54) **Dispositif élastique d'articulation de branches de lunettes**

(71) Demandeur: Waechter, Gilles, 75010 Paris (FR)
(72) Inventeur: Waechter, Gilles, 75010 Paris (FR)

(57) **Abrégé**

La présente invention concerne un ressort délimitant et réglant, respectivement, la position et l'écartement angulaires de branches de lunettes. De construction simple et peu coûteuse, le dispositif permet d'éliminer, grâce au seul ressort, les désagréments occasionnés par les charnières à vis (dérèglements et perte d'éléments vissés) et d'offrir, à l'utilisateur, un port souple et sécurisé, au service d'une tenue optimale des branches.

Ce dispositif d'extension angulaire de branches, solidaire par son bras (B1) de chaque extrémité de la monture des verres, se caractérise par un ressort (R) de torsion de préférence cylindrique, à action et à mémoire de forme angulaires, façonné en fil rond de faible diamètre, d'un seul tenant en un point de la branche; de manière que le bras du ressort (B2) prolongé par la branche (W) présente, par construction et au repos, un angle de fermeture mémorisé à environ 45° par rapport à ce même bras (B2) reporté, après extension angulaire, en position branche ajustée par le porteur.

L'invention s'adresse aux fabricants de montures de lunettes.

## Description

La présente invention concerne un ressort, constitutif des branches de lunettes, délimitant et réglant l'écartement angulaire de ces dernières, de façon à optimaliser le port et le maintien des lunettes.

L'articulation traditionnelle des branches se réalise au moyen de charnières équipées de vis, nécessitant de la sorte, un assemblage minutieux, délicat et coûteux. De plus, le montage et la consolidation par vis n'éliminent pas, pour le porteur, les risques de dévissage, de dérèglements ou de perte d'éléments vissés. Même si l'art existant nous dévoile un jeu angulaire extérieur, celui-ci offre un rattrapage latéral supplémentaire à la branche en cas de pliage excessif, mais n'intervient pas directement dans le réglage angulaire du port des branches.

L'invention vise à effacer ces désagréments et manquements, en proposant donc, comme réels avantages, une construction simplifiée et peu coûteuse, associée et combinée à une réorganisation fonctionnelle du déplacement angulaire des branches.

Pour ce faire, le concept inventif repose sur un ressort de torsion de préférence cylindrique (ou de cône tronqué éventuel), à action et à mémoire de forme angulaires, exécuté en fil rond et à spires jointives. Ce ressort enroulé, à droite (pour la branche gauche) et à gauche (pour la branche droite), suivant un axe vertical, laisse apparaître deux spires d'extrémités, à base rapprochée et dressée, dont les prolongements rectilignes -opposés et situés, chacun, sur un plan perpendiculaire au plan axial du ressort- seront appelés bras de ressort dans la présente invention. Le ressort ainsi façonné, à spires de diamètre réduit, d'un seul tenant en un point de la branche concrétise l'axe de flexion angulaire de cette dernière. Au montage, un bras du ressort, de préférence coudé, est rendu fixe et solidaire de chaque extrémité de la partie frontale de la monture des verres suivant la technique de cerclage des verres ou du verre percé. Le deuxième bras du ressort, faisant office dans sa continuité de branche opérationnelle, se trouve orienté, à la construction et au repos, vers l'intérieur de la monture; de façon à lui imprimer un angle conventionnel de fermeture et de préparation d'environ 45° par rapport à ce même bras ouvert en extension angulaire extérieure.

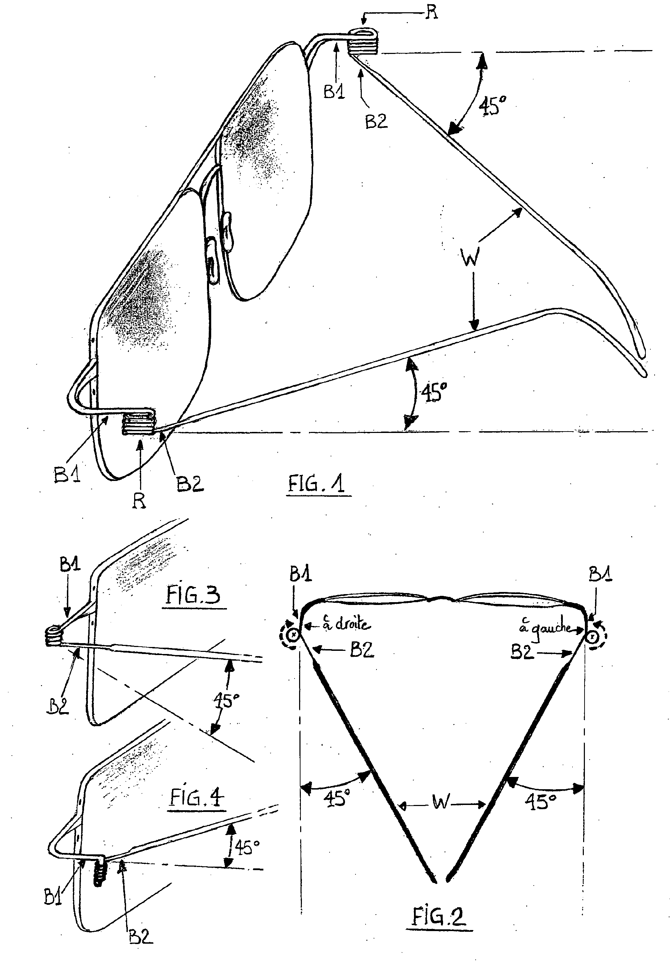

Sachant que la position branche ouverte constitue et conditionne la fonction essentielle et vitale du port des lunettes, cet angle spécifique imposé à la branche sera utilisé en écartement angulaire afin de garantir à l'utilisateur une tenue souple et un maintien temporal optimal. Inversement, la position branche fermée, ne trouvant qu'un usage accessoire, peut être solutionnée -branche au repos- par un repli angulaire de celle-ci sur un angle opératoire d'environ 30° et un maintien, dans cette position, dans une pochette ad hoc. Le concept inventif ainsi décrit, peut admettre les variantes d'agencement et de réalisations suivantes, marquées :
- par le transfert géographique du ressort positionné, en l'occurrence, à chaque extrémité de la monture afin d'aligner, sur un plan sensiblement horizontal, l'axe du ressort, son bras fixe et le plan de la monture des verres. Cette disposition permet d'augmenter, en extension angulaire extérieure, la longueur potentielle de la branche et de réduire, branche repliée, l'encombrement des lunettes dans leur pochette : voir fig.3.
- par la présence d'un support fixe cylindrique formé, à angle droit baissé ou levé, en un point de la branche et utilisé comme tuteur coaxial à un ressort de torsion défini ci-dessus. Ce ressort, à fil rond de diamètre réduit, façonné à partir de l'extrémité de ce support s'enroule, au contact et autour de ce dernier, à gauche ou à droite suivant la branche concernée et se termine, à hauteur de l'angle droit, par une spire dont le bras rectiligne matérialise la branche fonctionnelle respectant également l'écartement angulaire de préparation d'environ 45° : voir fig.4.
- par un pontet horizontal composé, en son milieu et d'une seule pièce, d'un ressort de compression absorbant, en outre, la poussée extérieure ou intérieure de la branche en extension angulaire.

En plus de ces figures 3 et 4, les dessins suivants illustrent essentiellement l'invention.

La fig.1 représente une vue latérale, en perspective, de l'invention; branches au repos suivant la disposition angulaire conceptuelle d'environ 45°.

La fig.2 représente une vue de dessus de la monture, toujours branches au repos, décrivant le sens d'enroulement des spires à partir du bras du ressort fixe (B1)

Comme défini ci - dessus, le sens d'enroulement des spires du ressort (R), droit ou gauche, affecté à chaque branche, jouera un rôle primordial dans le fonctionnement et la réaction mécanique à accorder au ressort lors de sa sollicitation. L'effet, recherché et revendiqué, est d'exercer, en extension extérieure angulaire d'environ 45° de la branche, une torsion et une compression accentuées, mais tolérables, des spires; de façon à maintenir la ressort en verticalité, sans déformation axiale, et de préserver, pendant la translation et dans la position - branche dépliée -, un parallélisme entre cette dernière et le bras du ressort fixe (B1) attenant à la monture des verres. Mécaniquement, en phase de réglage des branches, l'effort de poussée extérieure concentré sur la spire d'extrémité relative au bras du ressort (B2), suivant un déplacement en rotation quasiment coaxiale au ressort, sera contenu sur la longueur des spires voisines; atténuant ainsi la force de traction exercée sur le bras du ressort (B1) fixe, en l'occurrence, renforcé en dimension. Inversement, pour la position branche repliée, on assiste à un relâchement des spires accompagné d'une distorsion axiale du ressort. Ce mécanisme de réaction du ressort, incompatible avec les garanties techniques recherchées, n'est donc envisageable que pour la fermeture de la branche. En outre, la disposition angulaire des branches au repos permet d'exploiter toutes les propriétés mécaniques du ressort (pliage, traction, compression et torsion), au service des branches ainsi malléables et sécurisées. Enfin, pour obtenir un ensemble en mouvement performant, les spires, en comparaison du bras (B1), admettront un diamètre inférieur -constant ou dégressif- finissant à environ 0,5 mm sur le bras (B2) ; la cohérence du ressort résidera, par ailleurs, dans son diamètre intérieur et dans son nombre de spires restreint afin de lui assurer une stabilité axiale optimale. Vu le faible diamètre du fil des spires, le ressort sera enroulé à froid avec des matériaux appropriés: aciers spéciaux à base de cuivre, nickel, béryllium, titane, silicium et chrome ou d'alliages comme le cuprobéryllium ou le maillechort.

Le concept inventif est destiné à tous les fabricants de montures et d'armatures de lunettes de vue, de soleil ou de protection.

## Revendications

1. Dispositif d'extension angulaire de branches de lunettes -solidaire par son bras (B1) de chaque extrémité de la partie frontale de la monture des verres- **caractérisé par** un ressort (R) de torsion, à action et à mémoire de forme angulaires, façonné d'un seul tenant en un point de la branche ; de manière que le bras terminal du ressort (B2), prolongé par la branche (W) opérationnelle, présente, par construction et au repos, un angle de fermeture mémorisé à environ 45° par rapport à ce même bras (B2) reporté, après extension angulaire, en position branche ajustée pour le porteur.

2. Dispositif selon la revendication 1 **caractérisé par** un bras du ressort (B1), attenant à la monture et renforcé en dimension, à partir duquel se forment et s'enroulent , selon un axe vertical, les spires du ressort (R) jointives et à fil rond de diamètre à réduction constante ou dégressive ; en respectant un sens d'enroulement fonctionnel à droite -pour la branche gauche- et à gauche -pour la branche droite-

3. Dispositif selon les revendications 1 et 2 **caractérisé en ce qu'**il peut présenter, en alignement sensiblement horizontal, l'axe du ressort (R), le bras fixe (B1) et le plan de la monture des verres.

4. Dispositif selon les revendications 1 à 3 **caractérisé en ce qu'**il présente un parallélisme entre le bras fixe du ressort (B1) et le bras (B2), en déplacement angulaire extérieur de la branche (W) ainsi qu'en position branche (W) stabilisée à l'ouverture.

5. Dispositif selon l'une des revendications précédentes **caractérisé en ce qu'**il présente un ressort (R) de configuration cylindrique.

6. Dispositif selon l'une des revendications 1 à 4 **caractérisé en ce qu'**il peut présenter une configuration du ressort (R) en forme de cône tronqué.

7. Dispositif selon l'une des revendications 1 à 4 **caractérisé par** un pontet reliant les côtés des deux verres sur un plan horizontal et composé, en son milieu et d'une seule pièce, d'un ressort de compression venant amortir l'extension angulaire des branches.

8. Dispositif consolidé, à l'aide d'un tuteur coaxial au ressort (R), **caractérisé par** un support cylindrique -présent à angle droit du bras (B1)- à l'extrémité duquel se forment, à son contact, les spires du ressort définies et enroulées dans les revendications 2 et 5 ; ce ressort (R) se termine par le bas (B2), à hauteur du bras (B1), conformément aux prescriptions angulaires de la branche (W) contenues dans les revendications 1 et 4.
